# EUROPEAN PATENT SPECIFICATION

(11) **EP 3 531 777 B1**
(45) Date of publication and mention of the grant of the patent: **09.06.2021**
(21) Application number: 18158330.3
(22) Date of filing: 23.02.2018
(51) Int. Cl.: H04W 72/12, H04W 74/04

(54) **TDMA BASED CHANNEL ACCESS SYSTEM WITH IMPROVED POWER EFFICIENCY**
TDMA-BASIERTES KANALZUGANGSSYSTEM MIT VERBESSERTER LEISTUNGSEFFIZIENZ
SYSTÈME D'ACCÈS À UN CANAL AMRT À EFFICACITÉ DE PUISSANCE AMÉLIORÉE

(43) Date of publication of application: 28.08.2019
(73) Proprietor: Rohde & Schwarz GmbH & Co. KG, 81671 München (DE)
(72) Inventor: Kerger, Stefan, 85445 Aufkirchen (DE)
(74) Representative: Beder, Jens

(56) References cited:
- US-A1- 2009 154 481
- US-A1- 2014 269 474

## Description

The invention is in the field of TDMA based channel access systems. In particular a TDMA based, wireless system with an increased power efficiency and a corresponding method for a channel access system and a radio device are proposed.

Mobile wireless systems are well suited to rapidly changing environments, can be organized as self-organizing systems ("ad-hoc") and show a high survivability in demanding environments. Wireless ad hoc networks are a form of mobile wireless networks which not rely on a pre-existing infrastructure, for example access points managing the wireless network. Instead, each wireless device participating in the wireless ad-hoc network may participate in transmitting data to other wireless devices. The wireless devices or radio devices are often termed nodes.

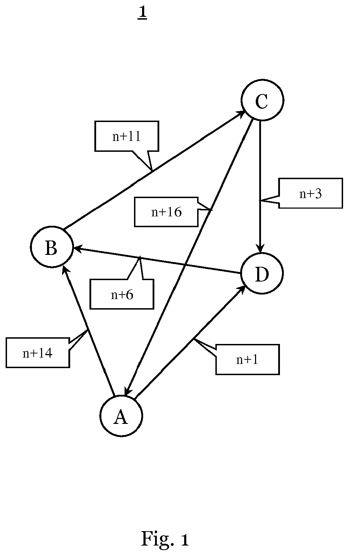

In this type of communication network illustrated at least in part in Fig. 1, a transmission from a node, for example node A in Fig. 1, is broadcast. Since the number of communication signals that a receiver of the node can simultaneously receive and process is limited, for example even limited to one, collisions between transmit signals of different nodes need to be avoided. This may be achieved for example by assigning each node one or more time slots in which the respective node is allowed to communication channel. Such time-division multiple access (TDMA) is a channel access method for communication networks sharing a communication medium, for example sharing a same frequency channel by organising the communication signal in different time slots. Each node transmits in rapid succession, one after the other, each node using its allocated time slot. Thus, multiple nodes may share a same radio frequency channel of the transmission medium while using only a part of the radio frequency channel's entire transmission capacity.

A method for automatically managing the communication channels capacity by dynamically assigning TDMA time slots to nodes in a communication network is described in US 5,719,868, for example. Further examples are provided in US 2009/154481 A1, and US 2014/269474 A1.

The decentralized nature of wireless ad-hoc networks renders them particularly suitable for applications where central infrastructure is not available. Minimal configuration and rapid deployment make ad hoc networks suitable for emergency situations such as natural disaster relief operations. Dynamic and adaptive routing protocols enable ad hoc networks to be established quickly.

The advantages of wireless ad-hoc networks are put into best use when the nodes are mobile radio devices operating from electric energy supplied by energy storages, for example batteries and in particular rechargeable batteries. Battery runtime or even battery life are accordingly a key issue, taking further into consideration that mobile wireless ad-hoc networks are particularly suited to application areas where a charging infrastructure is not easily available and charging a battery of a radio device may even imply withdrawing the mobile radio device from serving the mobile wireless network.

Thus, improving a battery runtime of a mobile radio device is an important issue in a mobile wireless network.

The object is achieved by the dynamic channel access system according to claim 1 and the corresponding radio device and dynamic channel access method.

A dynamic channel access system for a TDMA based communication network according to the invention comprises a plurality of radio devices. Each radio device is configured to operate in either a receive mode, a search mode or a standby mode, and to communicate using a communication signal which frames that are divided in a plurality of time slots. Each time slot is assigned either to a receive slot status, a search slot status or a standby slot status, wherein the assigned slot status depends on a current status of communication between the radio devices. In order to establish communication between two radio devices one for a plurality of time slots(s) is/are assigned to such communication of the respective radio devices. Each frame comprises a dedicated search time slot at a position known to each radio device. In the search time slot all participating radio devices are informed about assignment of the time slots for communication of the radio devices. Each radio device is configured to switch to a standby mode in time slots not being the search slot and not assigned to a communication of the respective radio device.

A status of communication between radio devices defines in particular if a communication link between radio devices is active or inactive, in particular if one radio device is communication with one or more other radio devices.

The time slots of a frame are arranged in a time sequence in the frame. Thus, each time slot has a given (time) position in the frame. The time slots of a frame may be numbered sequentially and the time slot number of each time slot defines a relative position of the time slot relative to the other time slots in the frame.

Taking into consideration that the radio devices of the communication system not only draw different amounts of energy in different operational modes but that the energy consumption in the standby mode is significantly smaller than in the search mode, a reduction in energy consumption of the radio device over the entire frame is achieved. This applies as the radio device even can be switched into standby mode but nevertheless is capable to switch to the receive mode for time slots where the device needs to communicate.

The reduced energy consumption of the radio device provides for an increased battery endurance and battery lifetime at a simultaneously unchanged communication volume of the radio device.

Lifecycle cost of the radio device will also be positively affected due to lower energy consumption. Simultaneously, the operating cost of the individual radio device and the entire communication network will be reduced.

At the same time heat dissipation of the radio device is reduced, resulting in a lower operating temperature of the radio device. A lower operating temperature over long periods of usage of the radio device will increase the lifetime of electronic components of the radio device and accordingly improve logistic parameters, for example mean time to repair (MTTR), mean time between failure (MTBF) and thus availability of the radio device as well as of the entire communication system.

The communication system of an advantageous embodiment comprises the radio device configured to operate in the search mode during the search time slot.

Preferably in case the radio device does not operate in the receive mode, the radio device is configured to operate in standby mode during all time slots except the search time slot. Thus, the consumed power of the communication network is minimized according to the invention.

The communication system according to another advantageous embodiment is characterized in that, that the search time slot is a first time slot in the frame which is not in the receive slot status.

Therefore, a dynamically changing allocation of a time slot to the search state is achieved over all participating radio devices without increasing overhead for signalling between the radio devices.

According to the invention, a radio device for a TDMA based communication network with a dynamic channel access system is configured to operate in a receive mode, a search mode or a standby mode, and to communicate using a communication signal which comprises a plurality of frames divided in a plurality of time slots. Each time slot is assigned either to a receive slot status, a search slot status or a standby slot status, wherein the assigned slot status depends on a current status of communication between the radio devices. Each frame comprises a dedicated search time slot at a known position in the frame. Each radio device is configured to switch to a standby mode in time slots not being the search time slot or receive time slot assigned to communication of the respective radio device.

A method for a dynamic channel access system in a TDMA based communication network also solves the technical problem. Each radio device operates in either a receive mode, a search mode or a standby mode. Each radio device communicates using a communication signal which comprises a plurality of frames divided in a plurality of time slots. Each time slot is assigned to a receive slot status, a search slot status or a standby slot status, wherein the assigned slot status depends on a current status of communication between the radio devices. Each frame comprises a dedicated search time slot at apposition known to each radio device. The radio device switches to a standby mode time slots not being the search time slot and not used for communication of the radio device.

Further, the invention relates to a computer program with program-code means for executing the method steps of the method for a dynamic channel access system in a TDMA based communication network when the program is executed on a computer or digital signal processor.

An embodiment of the invention is discussed with reference to the figures, in which
- Fig. 1: depicts a part of a mobile wireless communication system with nodes A, B, C and D. linked with each other by a radio link,
- Fig. 2: shows a communication signal in a TDMA system according to prior art with corresponding radio device modes, and
- Fig. 3: shows a communication signal in a TDMA system according to an embodiment with corresponding radio device modes.

Fig. 1 depicts a part of a mobile wireless communication network (system) 1 with nodes A, B, C and D. linked with each other by a radio link. Fig. 1 shows a one-hop network. A transmission from one node, for example node A is broadcast to all nodes B, C, D in its neighbourhood. In case of an UHF radio network, the neighbourhood of node A includes nodes B, C, and D within line of sight, generally within wireless range of node A. The range usually depends on the transmission medium, transmit power, receiver sensitivity and other well-known factors. The depicted communication network 1 is a one-hop network, which means that each node A, B, C, D is capable to communicate with every other node A, B, C, D and no relaying of signals to an intended destination node via one (two-hop) or more further nodes A, B, C, D is necessary.

Although the shown embodiment is a one-hop network 1, the presented approach is not limited to one-hop networks and is easily applicable in multi-hop broadcast networks also.

The nodes A, B, C, D can be radio devices (wireless devices), preferably mobile radio devices, and in particular mobile radio devices for communicating over a free space channel as transmission medium using electromagnetic waves in a predefined frequency band. The mobile devices may for example be satellite based radios, hand-held or vehicle mounted combat-net radios. The frequency band may be any one of the known communication frequency bands, for example the VHF or UHF frequency bands.

The term free space channel denotes in this context a physical channel.

In the context of present invention it suffices to define that the hardware of each of the nodes A, B, C, D comprises a transceiver which is connected with an omnidirectional antenna. The term communication channel denotes in this context a subdivision of the transmission medium which enables to transmit information from a source and to a destination (target) independent from and/or with only acceptable interference from or to another communication channel.

Thus, the nodes A, B, C, and D with their simplex transceivers can only either transmit or receive at a same time. The nodes A, B, C, and D each cannot receive a communication signal from more than one other node A, B, C, D at a same time. Individual communication channels may be defined based on a carrier frequency or bandwidth or -as sufficient for present invention-an allocated time slot.

The communication signal may transmit for example encoded information in form of data packets and modulated to a carrier signal.

Time-Division Multiple Access (TDMA) is a channel access method for sharing the transmission medium. Several nodes share the same frequency channel by dividing the communication signal into different time slots. The users transmit in rapid succession, one after the other, each using its own allocated time slot.

In dynamic time-division multiple access, a scheduling algorithm dynamically reserves a variable number of time slots in each frame having a predetermined length of time to variable bit-rate data streams, based on the traffic demand of each data stream between nodes A, B, C, D. The nodes A, B, C, D have got a common time base and are synchronized. The data transmission over the communication signal is organised in a time structure comprising a number of N frames. Each frame comprises M time slots. Each frame is divided into a plurality of time slots. The time slots each may be assigned a time slot identifier such as a sequential number on a per- frame basis.

A broadcast slot is usually the first slot of each frame for network management control data. Each node A, B, C, D has an assigned broadcast slot in the network. Thus, each node can transmit its control data once every N frames, if N nodes exist in the network. Accordingly a number of N frames represent a cycle.

A node A, B, C, D shares network management information as the control data with neighbouring nodes A, B, C, D by transmitting in its allocated broadcast slot. In its broadcast slot, all current or potential neighbours of the transmitting node have an opportunity to receive the control data from this node A, B, C, D. The control data comprises information necessary for implementing an entry into the network 1, managing the time slots allocation, and possibly other information benefitting from the broadcast nature of the control data, for example routing information.

Control data is advantageously transmitted at a most robust data rate available and with a minimized data size in order to reduce network overhead.

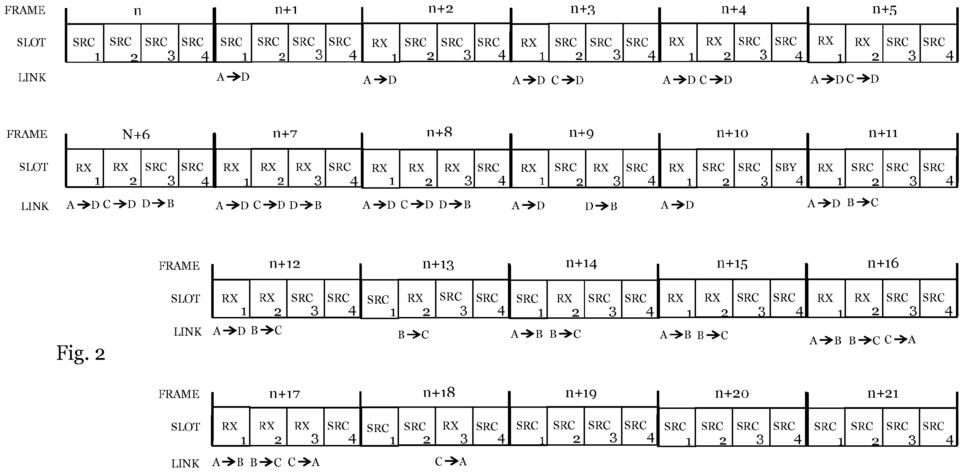

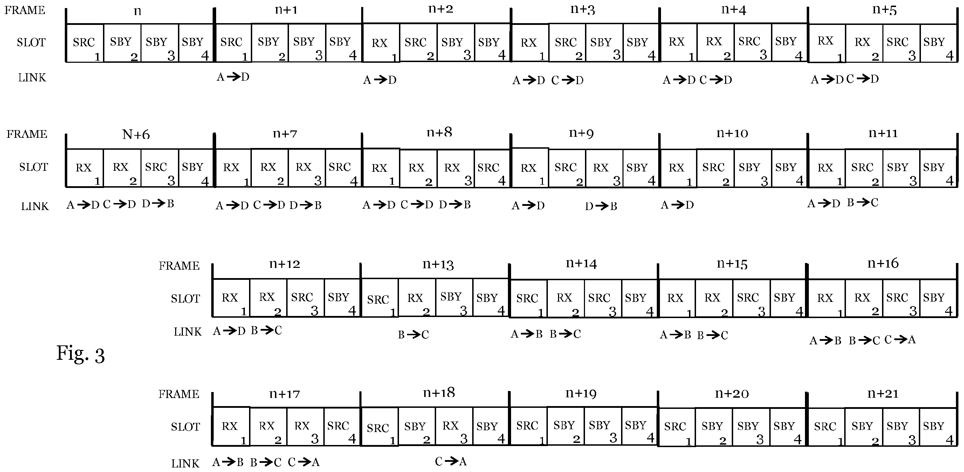

In Figs. 2 and 3, respectively N=22 frames are shown. Each of the depicted frames contains M=4 time slots. For sake of simplicity, broadcast slots for network traffic management are not shown in either of Figs. 2 and 3.

Generally a heuristic protocol is used to allocate a number of time slots to each node A, B, C, D and to coordinate their activation in the network 1. The many different approaches of allocating time slots are generally influenced by the application of the network such as unicast (peer-to-peer), multicast, broadcast.

In Fig. 1 an example of a communication scenario for the communication network 1 is shown. Each communication link is labelled with a frame number corresponding to a respective frame number in the communication scenario discussed with respect to figures 2 and 3.

For example a communication link from node A to node D is set to start (initiated, activated) in a frame n+1 of the communication signal. A communication link from node C to node D is to start in frame n+3. Node D itself transmits in frame n+6 to node B. Node A begins to transmit in the communication link to node B in frame n+14. In the communication link from node C to node A, node C starts transmitting in frame n+16. In the communication link from node B to node C, node B starts transmission in frame n+11.

Each of the communication links shown in Fig. 1, is allocated a respective transmission time slot in the frame structure of the transmission signal in the physical communication channel at a single carrier frequency shown in Fig.2 and Fig. 3.

In particular in Figs. 2 and 3, the node A is allocated a time slot with a slot number 1 for transmission. The node B is allocated a time slot 2 for transmission during frames n+11 to n+17 at least. The node C is allocated a time slot 2 for transmission up to frame n+8 at least, at the latest in frame n+16 this slot allocation is dynamically changed to time slot 3. The node D is allocated slot 3 for transmission at least during time slots n+6 to n+9

Fig.2 shows a communication signal in a TDMA network according to prior art with corresponding operational modes of the concerned radio devices or nodes A, B, C, D.

It is to be noted, that the slot state of a time slot indicates a logical label to the time slot assigned by the individual nodes A, B, C, D. This slot status may be either search status or reserved status. In search status, the time slot is reserved for transmission of data, however no actual transmission of data occurs. In receive status, an actual data transmission occurs in the time slot.

In search mode or in receive mode, the transceiver of the node A, B, C and D is able to receive (to listen) on the broadcast medium to transmitted communication signals. In receive mode the transceiver of the node A, B, C, and D actually receives a communication signal. The operational modes search mode and receive mode are operational modes of the wireless device or node A, B, C, and D.

The communication signal is depicted in Figs. 2 and 3 for frames n to n+21.

During frame n no communication link in network 1 is actively transmitting. All time slots 1, 2, 3 and 4 in frame n require nodes A, B, C, and D to be in search mode for all time slots as either of the other nodes A, B, C, and D might be transmitting.

In frame n+1, node A starts transmitting in time slot 1.

In subsequent frame n+2 node A transmits in time slot 1 and node D changes into receive mode in time slot 1. The node D remains in search mode for the time slots 2, 3, and 4. The nodes A, B, C remain in search mode for all time slots of frame n+2.

In frame n+3, node A continues transmitting in time slot 1. The node D remains in receive mode in time slot 1 and in the search mode for time slots 2, 3, 4. Node C starts transmitting to node D. Nodes A, B, C remain in search mode for all time slots 1, 2, 3, 4.

In frame n+4, node A continues transmitting in time slot 1 to node D. Node C continues to transmit to node D in time slot 2. Nodes A and C remain in search mode for all time slots 1, 2, 3, 4, while node D changes into receive mode during time slot 2 in addition to time slot 1. In time slots 2 and 3, node D is in search mode.

In frame n+5, node A continues transmitting to node D in time slot 1. Node C continues to transmit to node D in time slot 2.

In frame n+5, Nodes A and C remain in search mode for all time slots 1, 2, 3, 4, while node D is invariably in receive mode in time slots 1, 2 and in search mode in time slots 3, 4.

In frame n+6, node A continues transmitting in time slot 1. Node C continues to transmit to node D in time slot 2. Node D begins to transmit to node B in time slot 3.

Nodes A and C remain in search mode for all time slots, while node D invariably is in receive mode in time slots 1, 2, and in search mode in time slots 3, 4 in frame n+6.

In frame n+7, node A continues transmitting in time slot 1. Node C continues to transmit to node D in time slot 2. Node D begins to transmit to node B in time slot 3. Nodes A and C remain in search mode for all time slots, while node D invariably is in receive mode in time slots 1, 2, and in search mode in time slots 3, 4. Node B changes into receive mode in time slot 3 and remains in search mode for time slots 1, 2, 4.

In frame n+8, node A continues transmitting to node D in time slot 1. Node C continues to transmit to node D in time slot 2. Node D continues to transmit to node B in time slot 3. Nodes A and C remain in search mode for all time slots, while node D invariably is in receive mode in time slots 1, 2, and in search mode in time slots 3, 4. Node B remains in receive mode in time slot 3 and remains in search mode for time slots 1, 2, 4.

In frame n+9, node A continues transmitting to node D in time slot 1. Node D continues to transmit to node B in time slot 3.

In frame n+9, the nodes A and C remain in search mode for all time slots, while node D invariably is in receive mode in time slot 1, and in search mode in time slots 2, 3, 4, as the link from node C to node D is now inactive. Node B remains in receive mode in time slot 3 and remains in search mode for time slots 1, 2, and 4.

In frame n+10, only node A continues transmitting to node D in time slot 1. The link from node D to node B falls inactive.

Accordingly, in frame n+10, nodes A, B and C are in search mode for all time slots, while node D invariably is in receive mode in time slot 1, and in search mode in time slots 2, 3, 4. Node B switches from receive mode to search mode for time slot 3 and remains in search mode for time slots 1, 2, and 4.

In frame n+11, node A continues transmitting to node D in time slot 1. For the link from node B to node C, time slot 2 is allocated and is also active.

Accordingly, in frame n+11, the nodes A, B and C are in search mode for all time slots, while node D invariably is in receive mode in time slot 1, and in search mode in time slots 2, 3, 4.

In frame n+12, node A continues transmitting to node D in time slot 1 and node B continues transmitting to node C in time slot 2.

Accordingly, in frame n+12, the nodes A and B are in search mode for all time slots, while node D invariably is in receive mode in time slot 1, and in search mode in time slots 2, 3, 4. Node C switches from search mode to receive mode for time slot 2 and remains in search mode for time slots 1, 3, 4.

In frame n+13, node A has its transmission to node D finished and the communication link from node A to node D is now inactive. Node B continues transmitting to node C in time slot 2.

Accordingly, in frame n+13, the nodes A, B and D are in search mode for all time slots, while node C invariably is in receive mode in time slot 2, and in search mode in time slots 1, 3, 4.

In frame n+14, node A activates the communication link to node B in time slot 1. Node B continues transmitting to node C in time slot 2.

Accordingly, in frame n+14, the node A and node D are in search mode for all time slots, while node C invariably is in receive mode in time slot 2, and in search mode in time slots 1, 3, 4. Node B is still in search mode in all time slots 1, 2, 3, and 4.

In frame n+15, node A transmits in the active communication link to node B in time slot 1. Node B continues transmitting to node C in time slot 2.

Accordingly, in frame n+15, node A and node D are in search mode for all time slots, while node C is in receive mode in time slot 2, and in search mode in time slots 1, 3, 4. Node B has switched to receive mode in time slot 1 in search mode and is in search mode in time slots 2, 3, 4.

In frame n+16, node A transmits in the active communication link to node B in time slot 1. Node B continues transmitting to node C in time slot 2. Node C activate the communication link to node A in time slot 3.

Accordingly, in frame n+16, the node D is in search mode for all time slots, while node C is in receive mode in time slot 2, and in search mode in time slots 1, 3, 4. Node B is in receive mode in time slot 1 and is in search mode in time slots 2, 3, 4. Node A is in search mode in time slots 1,2,3,4.

In frame n+17, node A transmits in the active communication link to node B in time slot 1. Node B continues transmitting to node C in time slot 2. Node C communicates to node A in time slot 3.

In frame n+17, node D is in search mode for all time slots, while node C is in receive mode in time slot 2, and in search mode in time slots 1, 3, 4. Node B is in receive mode in time slot 1 and is in search mode in time slots 2, 3, 4. Node A is in receive mode in time slot 3, and in search mode in time slots 1, 2, 4.

In frame n+18, node C communicates to node A in time slot 3. The communication links from node A to node B and from node B to node C are now inactive.

In frame n+18, nodes B, C, and D are in search mode for all time slots, while node A is in receive mode in time slot 3, and in search mode in time slots 1, 2, 4.

In frame n+19, node C has ended communicating to node A.

In frame n+19, nodes A, B, C, D are in search mode for all time slots.

In frame n+20 and frame n+21, none of the communication links is active. Thus, in frames n+20 and n+21, nodes A, B, C, D are in search mode for all time slots.

The operational modes of nodes A, B, C, and D in 'Fig. 2 as well as in the succeeding discussion of Fig. 3 are only those modes of nodes A, B, C, and D which are of relevance in the depicted communication scenario.

Fig.3 shows a communication signal in a TDMA based communication network according to an embodiment of the invention with corresponding stati of time slots and the relevant nodes A, B, C, D.

In search status or in receive status, the transceiver is able to receive (to listen) on the broadcast medium. Contrary to prior art, the transceivers of nodes A, B, C, and D will in Fig. 3 also change into the standby mode, in which the transceiver has a significantly lower energy consumption, however the transceiver is deaf to any communication signal in the standby mode, meaning that it cannot receive. However, the inventive radio device is able to change directly from the standby mode into the receive mode.

The communication signal is depicted in Figs. 3 for frames n to n+21.

In Fig. 3, a same communication link activation sequence for a same general network structure of the communication network 1 as in Fig. 2 of the prior art is shown as example. Thus, from the shown subset of operational modes of nodes A, B, C, D during the frames n to n+21 in Fig. 3, a reduction in energy consumption over the communication network 1 will become apparent.

Fig. 3 depicts an embodiment in which the time slot with the lowest time slot number, which at a same time no active transmission is scheduled, is in the search status. However, this selection for the search slot may be replaced any other agreement for allocating the search slot within a frame without deviating from the inventive approach.

In particular, during a first depicted frame n no communication link in the communication network 1 is actively transmitting data. Time slot 1 in frame n requires nodes A, B, C, D to be in search status as either of the other nodes A, B, C, D might be transmitting. Nevertheless, during time slots 2, 3, 4 all nodes A, B, C, D can be in standby mode for reducing energy consumption of the nodes A, B, C, D.

In frame n+1, node A starts transmitting to node D in time slot 1.

In frame n+1, during all time slots 2, 3, 4, nodes A, B, C, D can be in standby mode for reducing energy consumption of the nodes A, B, C, D. Time slot 1 in frame n requires nodes A, B, C, D to be in search status as either of the other nodes A, B, C, D might be transmitting and node D indeed receives in the active transmission link from node A to node D.

In subsequent frame n+2 node D changes into receive mode in time slot 1. Nodes A, B, C, D change into search mode for the time slot 2. Nodes A, B, C remain in or are switched to standby mode for time slots 1, 3, and 4. It is to be noted that with time slot 1 having an active transmission for one link, actually from node A to node D, all nodes change into the search mode for the time slot not in the receive status, actually time slot 2, i.e. for which no communication link is active. No communication link is active means that none of the participating nodes A, B, C, D of the network 1 is scheduled to transmit in time slot 2.

In frame n+3, node A continues transmitting in time slot 1. Node D changes into receive mode in time slot 1 and remains in the search mode for time slot 2. Nodes A, B, C remain in search mode in time slot 2, also. Nodes A, B, C remain in standby mode for time slots 1, 3, and 4, but node C indicates communication with node D in time slot 2 in the next frame.

In frame n+4, node A continues transmitting in time slot 1 to node D. Node C transmits to node D in time slot 2.

Node D changes into receive mode during time slot 2 in addition to time slot 1. In time slot 3, node D is in search mode. In time slot 4, node D can remain in standby mode. The nodes A, B, C, D change into search mode for the time slot 3. The nodes A, B, C are now in standby mode for time slots 1, 2, and 4. It is to be noted that with time slots 1 and 2 having an active transmission for one communication link respectively, actually from node A to node D and from node C to node D, all nodes change into the search mode for the time slot with the next lowest time slot number, actually time slot 3, for which no communication link is scheduled to be active. No communication link is active means that none of the participating nodes A, B, C, D of the network 1 is scheduled to transmit in time slot 3.

In frame n+5, node A continues transmitting to node D in time slot 1. The node C continues to transmit to node D in time slot 2.

Thus in frame n+5, the nodes A, B, C and D remain in search mode for time slot 3. Node D invariably is in receive mode in time slots 1, 2, and in search mode in time slot 3 and in standby mode in time slot 4. The nodes A, B, C are in standby mode in time slots 1, 2 and 4.

In frame n+6, node A transmits in time slot 1. Node C continues to transmit to node D in time slot 2. Node D indicates to transmit to node B in time slot 3 starting in the next frame.

Thus in frame n+6, nodes A, B, C and D remain in search mode for time slot 3. Node D invariably is receive mode in time slots 1 and 2, and in search mode in time slot 3 and in standby mode in time slot 4. Nodes A, B, C are in standby mode in time slots 1, 2 and 4.

In frame n+7, node A continues transmitting in time slot 1. Node C continues to transmit to node D in time slot 2. The node D begins to transmit to node B in time slot 3.

In frame n+7, node D is in receive mode during time slot 1 and in time slot 2. In time slot 3, node D is in now in standby mode. In time slot 4, node D switches to search mode. Nodes A, B, C, D change into search mode for the time slot 4. Nodes A and C are now in standby mode for time slots 1, 2, and 3. Due to time slots 1, 2 and 3 having an active transmission for one communication link respectively, actually from node A to node D, from node C to node D and from node D to node B, all nodes A, B, C, D change into the search mode for the time slot with the lowest available time slot number, actually time slot 4, for which no communication link is scheduled to be active.

In frame n+8, node A continues transmitting to node D in time slot 1. Node C continues to transmit to node D in time slot 2. Node D continues to transmit to node B in time slot 3.

Accordingly no change in operation modes of nodes A, B, C, D will occur in frame n+8.

In frame n+9, node A continues transmitting to node D in time slot 1. Node D continues to transmit to node B in time slot 3. The transmission link from node C to D is now inactive in time slot 2.

In frame n+9, node D is in receive mode during time slot 1 alone. In time slots 3 and 4, node D is in now in standby mode. In time slot 2, node D switches to search mode. Nodes A, B, C, D change into search mode for the time slot 2. Nodes A and C are now in standby mode for time slots 1, 3, and 4. Due to time slots 1 and 3 having an active transmission for one communication link respectively, actually from node A to node D and from node D to node B, all nodes A, B, C, and D change into the search mode for the time slot with the lowest available time slot number, actually time slot 2, for which no communication link is scheduled to be active.

In frame n+10, only node A continues to transmit to node D in time slot 1. The link from node D to node B is now inactive.

Accordingly, in frame n+10, node D is in receive mode during time slot 1 alone. In time slots 3 and 4, node D is in now in standby mode. Nodes A, B, C, D are still in search mode for the time slot 2. Nodes A, B and C are now in standby mode for time slots 1, 3, and 4. Due to time slot 1 having an active transmission for one communication link respectively, actually from node A to node D, all nodes A, B, C, D change into the search mode for the time slot with the next lowest time slot number, actually time slot 2, for which no communication link is scheduled to be active.

In frame n+11, node A continues transmitting to node D in time slot 1. For the link from node B to node C, time slot 2 is allocated and is now also active.

Accordingly, in frame n+11, node D is in receive mode during time slot 1 alone. In time slots 3 and 4, node D is in now in standby mode. Nodes A, B, C, D are still in search mode for the time slot 2. The nodes A, B and C are still in standby mode for time slots 1, 3, and 4. Due to time slot 1 having an active transmission for one communication link respectively, actually from node A to node D, all nodes A, B, C, D remain in the search mode for the time slot with the next lowest time slot number, actually time slot 2, for which no communication link is scheduled to be active.

In frame n+12, node A continues transmitting to node D in time slot 1 and node B continues transmitting to node C in time slot 2.

Accordingly, in frame n+12, node C changes into receive mode during time slot 2 in addition to node D being in receive mode in time slot 1. Nodes A, B, C, D change into search mode for the time slot 3. Nodes A and B are now in standby mode for time slots 1, 2, and 4. Node C is in standby mode in time slots 1 and 4. Node D is in standby mode in time slots 2 and 4. It is to be noted that with time slots 1 and 2 having an active transmission for one communication link respectively, actually from node A to node D and from node B to node C, all nodes A, B, C, D change into the search mode for the time slot with the next lowest time slot number, actually time slot 3, for which no communication link is scheduled to be active.

In frame n+13, node A has finished transmission to node D and the communication link from node A to node D is now inactive. Only node B continues transmitting to node C in time slot 2.

Accordingly, in frame n+13, node C is in receive mode during time slot 2. Nodes A, B, C, D are in search mode for the time slot 1. Nodes A, B and D are now in standby mode for time slots 2, 3 and 4. Node C is in standby mode in time slots 3 and 4. Node D is in standby mode in time slots 2 and 4.

In frame n+14, node A activates the communication link to node B in time slot 1. Node B continues transmitting to node C in time slot 2.

Accordingly, in frame n+14, the nodes A, B, C and D are in search mode for time slot 1, while node C invariably is in receive mode in time slot 2. Node B is still in search mode in time slot 1. Node A is in standby mode in time slots 3 and 4, node B is in standby mode in time slots 2, 3, 4, node C is in standby mode in time slots 3 and 4 and node D is in standby mode in time slots 2, 3 and 4.

In frame n+15, node A transmits to node B in an active communication link in time slot 1. Node B continues transmitting to node C in time slot 2.

Accordingly, in frame n+15, the nodes A, B, C and D switch into search mode for time slot 3, while node C is in receive mode in time slot 2 and node B is in receive mode in time slot 1. Node A is in standby mode in time slots 1, 2 and 4, node B is in standby mode in time slots 2 and 4, node C is in standby mode in time slots 1 and 4 and node D is in standby mode in time slots 1, 2 and 4.

In frame n+16, node A transmits to node B in the active communication link in time slot 1. Node B continues transmitting to node C in time slot 2. Node C activates the communication link to node A in time slot 3.

Accordingly, in frame n+16, the nodes are in the same operation modes as in frame n+15 respectively.

In frame n+17, node A transmits in the active communication link to node B in time slot 1. Node B continues transmitting to node C in time slot 2. Node C communicates to node A in time slot 3.

In frame n+17, node B is in receive mode during time slot 1, node C is in receive mode in in time slot 2 and node A is in receive mode in time slot 3. Nodes A, B, C, and D change into search mode during the time slot 4. Due to time slots 1, 2 and 3 having an active transmission for one communication link respectively, all nodes A, B, C, D change into the search mode for the time slot with the next lowest time slot number, actually time slot 4, for which no communication link is scheduled to be active. Node A is in standby in time slot 2, node B can be in standby mode in time slot 3, node C can be in standby mode in time slot 1 and node D can be in standby mode in time slot 1, 2 and 3.

In frame n+18, the only active communication link is from node C to node A and scheduled for time slot 3 of frame n+18.

In frame n+18, nodes A, B, C, D are all in search mode for time slot 1, while node A is in receive mode in time slot 3. Node A is in standby in time slot 2 and 4, node B can be in standby mode in time slots 2, 3 and 4, node C can be in standby mode in time slots 2 and 4, and node D can be in standby mode in time slot 2, 3 and 4.

In frame n+19, node C has ended communicating to node A.

In frame n+19, nodes A, B, C, D are in search mode for time slot 1. Nodes A, B, C, D are in standby mode in times lots 2, 3 and 4.

In frame n+20 and n+21, none of the communication links is active. Thus, in frames n+20 and n+21, the same operational modes of the nodes A, B, C, and D apply as in the preceding frame n+19.

Fig. 2 and Fig. 3 depict a same communication scenario with same communication links with respect to a time point of view between nodes A, B, C, D for the known communication network in Fig. 2 and a communication network 1 according to an embodiment in Fig. 3. The respective assigned time slot stati for the time slots in Fig. 2 and Fig. 3 indicate that in the embodiment, nodes A, B, C and D are enabled to switch into a standby state for many of the time slots. Contrary to the embodiment, the known approach requires nodes A, B, C and D to remain in search mode during all of the reserved time slots in order to listen to transmissions from other nodes A, B, C and D, for whom the respective time slots are reserved.

The embodiment of Fig. 3 shows that each time slot is assigned to either a receive slot status, a search slot status or a standby slot status, the assigned slot status depending on a current status of communication between nodes A, B, C, D. Each frame n,..., n+21 comprises a dedicated search time slot at a position known to each node A, B, C, D, and each node A, B, C, D switches to a standby mode for all time slots where the respective device is neither in search mode nor receive mode.

When taking into consideration that an energy consumption of a node A, B, C, and D in receive mode may be normalized to 1, a corresponding normalized energy consumption in search mode is then about 0.75 and a normalized energy consumption in standby mode for the node A, B, C, and D is then assumed to be about 0.25. Comparing the distribution of operational modi during time slots 1, 2, 3, and 4 in time frames n to n+21 for the prior art system and the invention shows a significant reduction in energy consumption for each of nodes A, B, C and D for the optimized communication network 1 according to the embodiment.

Even when taking only the depicted operational modes shown in Fig. 3 shown for a reduced and most relevant subset of nodes A, B, C and D into account, the optimized approach for the embodiment shows a significant reduction in energy consumption.

By enabling the nodes A, B, C, and D to switch directly from the standby mode to the receive mode based on the information communicated in the search time slot, an advantageously low energy consumption over the entire communication network 1 is to achieved, resulting for example in a significantly improved battery endurance.

The system and method for a channel access system is particularly suited to be implemented as one or more program modules running on a processor connected to a memory and arranged in the radio device. Accordingly the TDMA based channel access system represents an advantageous upgrade to known radio devices without significantly altering their physical structure.

## Claims

1. A dynamic channel access system for a TDMA based communication network (1) configured as a wireless ad-hoc network comprising a plurality of radio devices (A, B, C, D),
wherein each radio device (A, B, C, D) is configured to operate in a receive mode, a search mode or a standby mode as relevant operational modes,
wherein in the search mode each radio device (A, B, C, D) is able to receive a communication signal on a broadcast medium, in the receive mode is actually receiving or transmitting a communication signal, and in the standby mode is deaf to any communication signal,
wherein each radio device (A, B, C, D) is configured to communicate using a communication signal which comprises a plurality of frames divided in a plurality of time slots,
wherein each radio device (A, B, C, D) is configured to share control data with neighbouring radio devices (A, B, C, D), the control data comprising data for managing time slot allocation in the communication network (1) and each radio device (A, B, C, D) is configured to indicate communication with another radio device (A, B, C, D) in a time slot of a next frame, and
wherein each radio device (A, B, C, D) is configured to switch between the operational receive mode, search mode and standby mode,
each radio device (A, B, C, D) is configured to assign each time slot to either a receive slot status, a search slot status or a standby slot status, wherein the assigned slot status depends on a current status of communication between the radio devices (A, B, C, D) and wherein the status of communication between the radio devices (A, B, C, D) defines in particular if one radio device (A, B, C, D) is communicating with one or more other radio devices (A, B, C, D),
each frame comprises exactly one search time slot at a position known to each radio device (A, B, C, D),
each radio device (A, B, C, D) is configured to determine the search time slot in a frame being the first time slot which is not in the receive slot status, and
each radio device (A, B, C, D) is configured to switch to a standby mode for all time slots except for the search time slots and receive time slots that are assigned to a communication of the respective radio device (A, B, C, D).

2. The system according to claim 1, wherein all radio devices (A, B, C, D) of the network are configured to operate in the search mode during the search time slot.

3. A radio device for a TDMA based communication network (1) configured as a wireless ad-hoc network with a dynamic channel access system,
wherein the radio device is configured to operate in a receive mode, a search mode or a standby mode as relevant operational modes,
wherein in the search mode the radio device is able to receive a communication signal on a broadcast medium, in the receive mode is actually receiving a communication signal, and in the standby mode is deaf to any communication signal, and
the radio device is configured to communicate with another radio device (A, B, C, D) of the communication network (1) using a communication signal which comprises a plurality of frames divided in a plurality of time slots,
wherein the radio device is configured to share control data with another neighbouring radio devices, the control data comprising data for managing time slot allocation in the communication network (1) and the radio device is configured to indicate communication with the other radio device in a time slot of a next frame, and
wherein the radio device is configured to switch between the operational receive mode, search mode and standby mode,
the radio device is configured to assign each time slot to either a receive slot status, a search slot status or a standby slot status, wherein the assigned slot status depends on a current status of communication between radio devices (A, B, C, D) and wherein the status of communication between radio devices (A, B, C, D) defines in particular if one radio device (A, B, C, D) is communicating with one or more other radio devices (A, B, C, D),
the radio device is configured to switch to search mode in one dedicated search time slot at a known position in the frame,
the radio device is configured to determine the search time slot in a frame as the first time slot which is not in the receive slot status, and
the radio device (A, B, C, D) is configured to switch to a standby mode for all time slots except for the search time slots and receive time slots that are assigned to a communication of the radio device (A, B, C, D).

4. A method for a dynamic channel access system in a TDMA based communication network (1) configured as a wireless ad-hoc network comprising a plurality of radio devices (A, B, C, D),
wherein each radio device (A, B, C, D) operates in a receive mode, a search mode or a standby mode as relevant operational modes,
wherein in the search mode each radio device (A, B, C, D) is able to receive a communication signal on a broadcast medium, in the receive mode is actually receiving or transmitting a communication signal, and in the standby mode is deaf to any communication signal, and
wherein each radio device (A, B, C, D) communicates using a communication signal which comprises a plurality of frames divided in a plurality of time slots,
wherein each radio device (A, B, C, D) shares control data with neighbouring radio devices (A, B, C, D), the control data comprising data for managing time slot allocation in the communication network (1) and each radio device (A, B, C, D) indicates communication with another radio device (A, B, C, D) in a time slot of a next frame, and
wherein each radio device (A, B, C, D) switches between the operational receive mode, search mode and standby mode, each radio device (A, B, C, D) assigns each time slot to either a receive slot status, a search slot status or a standby slot status, wherein the assigned slot status depends on a current status of communication between the radio devices (A, B, C, D) and wherein the status of communication between radio devices (A, B, C, D) defines in particular if one radio device (A, B, C, D) is communicating with one or more other radio devices (A, B, C, D),
each frame comprises exactly one search time slot at a position known to each radio device (A, B, C, D),
each radio device (A, B, C, D) determines the search time slot in a frame being the first time slot which is not in the receive slot status, and
each radio device (A, B, C, D) switches to a standby mode in time slots that are not in the search status and not in a receive status assigned to a communication of the respective radio device (A, B, C, D).

5. The method according to claim 4, wherein all the radio devices (A, B, C, D) of the communication network (1) operate in the search mode during the search time slot.

6. A computer program with program-code means for executing the steps according to one of claims 4 to 5, when the program is executed on a computer or digital signal processor.

## Patentansprüche

1. Dynamisches Kanalzugangssystem für ein TDMA-basiertes Kommunikationsnetzwerk (1), das als ein drahtloses Adhocnetzwerk ausgelegt ist, das eine Vielzahl von Funkvorrichtungen (A, B, C, D) umfasst,
wobei jede Funkvorrichtung (A, B, C, D) dazu ausgelegt ist, in einem Empfangsmodus, einem Suchmodus oder einem Standbymodus als relevante Betriebsmodi betrieben zu werden,
wobei jede Funkvorrichtung (A, B, C, D) im Suchmodus in der Lage ist, ein Kommunikationssignal auf einem Broadcastmedium zu empfangen, im Empfangsmodus ein Kommunikationssignal tatsächlich empfängt oder überträgt und im Standbymodus für jedes Kommunikationssignal taub ist,
wobei jede Funkvorrichtung (A, B, C, D) dazu ausgelegt ist, unter Verwendung eines Kommunikationssignals zu kommunizieren, das eine Vielzahl von Frames umfasst, die in eine Vielzahl von Zeitschlitzen geteilt sind,
wobei jede Funkvorrichtung (A, B, C, D) dazu ausgelegt ist, Steuerdaten mit benachbarten Funkvorrichtungen (A, B, C, D) gemeinsam zu verwenden, wobei die Steuerdaten Daten zum Verwalten einer Zeitschlitzzuteilung im Kommunikationsnetzwerk (1) umfassen und jede Funkvorrichtung (A, B, C, D) dazu ausgelegt ist, eine Kommunikation mit einer anderen Funkvorrichtung (A, B, C, D) in einem Zeitschlitz eines nächsten Frames anzuzeigen, und
wobei
jede Funkvorrichtung (A, B, C, D) dazu ausgelegt ist, für den Betrieb zwischen dem Empfangsmodus, dem Suchmodus und dem Standbymodus umzuschalten,
jede Funkvorrichtung (A, B, C, D) dazu ausgelegt ist, jedem Zeitschlitz entweder einen Empfangsschlitzstatus, einen Suchschlitzstatus oder einen Standbyschlitzstatus zuzuweisen, wobei der zugewiesene Schlitzstatus von einem aktuellen Status der Kommunikation zwischen den Funkvorrichtungen (A, B, C, D) abhängig ist und wobei der Status der Kommunikation zwischen den Funkvorrichtungen (A, B, C, D) insbesondere definiert, ob eine Funkvorrichtung (A, B, C, D) mit einer oder mehreren anderen Funkvorrichtungen (A, B, C, D) kommuniziert,
jeder Frame genau einen Suchzeitschlitz in einer Position umfasst, die jeder Funkvorrichtung (A, B, C, D) bekannt ist,
jede Funkvorrichtung (A, B, C, D) dazu ausgelegt ist zu bestimmen, dass der Suchzeitschlitz in einem Frame der erste Zeitschlitz ist, der sich nicht im Empfangsschlitzstatus befindet, und
jede Funkvorrichtung (A, B, C, D) dazu ausgelegt ist, für alle Zeitschlitze außer den Suchzeitschlitzen und den Empfangszeitschlitzen, die einer Kommunikation der jeweiligen Funkvorrichtung (A, B, C, D) zugewiesen sind, in einen Standbymodus umzuschalten.

2. System nach Anspruch 1, wobei
alle Funkvorrichtungen (A, B, C, D) des Netzwerks dazu ausgelegt sind, während des Suchzeitschlitzes im Suchmodus betrieben zu werden.

3. Funkvorrichtung für ein TDMA-basiertes Kommunikationsnetzwerk (1), das als ein drahtloses Adhocnetzwerk mit einem dynamischen Kanalzugangssystem ausgelegt ist,
wobei die Funkvorrichtung dazu ausgelegt ist, in einem Empfangsmodus, einem Suchmodus oder einem Standbymodus als relevante Betriebsmodi betrieben zu werden,
wobei die Funkvorrichtung im Suchmodus in der Lage ist, ein Kommunikationssignal auf einem Broadcastmedium zu empfangen, im Empfangsmodus ein Kommunikationssignal tatsächlich empfängt, und im Standbymodus für jedes Kommunikationssignal taub ist, und
die Funkvorrichtung dazu ausgelegt ist, mit einer anderen Funkvorrichtung (A, B, C, D) des Kommunikationsnetzwerks (1) unter Verwendung eines Kommunikationssignals zu kommunizieren, das eine Vielzahl von Frames umfasst, die in eine Vielzahl von Zeitschlitzen geteilt sind,
wobei die Funkvorrichtung dazu ausgelegt ist, Steuerdaten mit anderen benachbarten Funkvorrichtungen gemeinsam zu verwenden, wobei die Steuerdaten Daten zum Verwalten einer Zeitschlitzzuteilung im Kommunikationsnetzwerk (1) umfassen und die Funkvorrichtung dazu ausgelegt ist, eine Kommunikation mit der anderen Funkvorrichtung in einem Zeitschlitz eines nächsten Frames anzuzeigen, und
wobei
die Funkvorrichtung dazu ausgelegt ist, für den Betrieb zwischen dem Empfangsmodus, dem Suchmodus und dem Standbymodus umzuschalten,
die Funkvorrichtung dazu ausgelegt ist, jedem Zeitschlitz entweder einen Empfangsschlitzstatus, einen Suchschlitzstatus oder einen Standbyschlitzstatus zuzuweisen, wobei der zugewiesene Schlitzstatus von einem aktuellen Status der Kommunikation zwischen Funkvorrichtungen (A, B, C, D) abhängig ist und wobei der Status der Kommunikation zwischen Funkvorrichtungen (A, B, C, D) insbesondere definiert, ob eine Funkvorrichtung (A, B, C, D) mit einer oder mehreren anderen Funkvorrichtungen (A, B, C, D) kommuniziert,
die Funkvorrichtung dazu ausgelegt ist, in einem dedizierten Suchzeitschlitz in einer bekannten Position im Frame in den Suchmodus umzuschalten,
die Funkvorrichtung dazu ausgelegt ist, den Suchzeitschlitz in einem Frame als den ersten Zeitschlitz zu bestimmen, der sich nicht im Empfangsschlitzstatus befindet, und
die Funkvorrichtung (A, B, C, D) dazu ausgelegt ist, für alle Zeitschlitze außer den Suchzeitschlitzen und den Empfangszeitschlitzen, die einer Kommunikation der Funkvorrichtung (A, B, C, D) zugewiesen sind, in einen Standbymodus umzuschalten.

4. Verfahren für ein dynamisches Kanalzugangssystem in einem TDMA-basierten Kommunikationsnetzwerk (1), das als ein drahtloses Adhocnetzwerk ausgelegt ist, das eine Vielzahl von Funkvorrichtungen (A, B, C, D) umfasst,
wobei jede Funkvorrichtung (A, B, C, D) in einem Empfangsmodus, einem Suchmodus oder einem Standbymodus als relevante Betriebsmodi betrieben wird,
wobei jede Funkvorrichtung (A, B, C, D) im Suchmodus in der Lage ist, ein Kommunikationssignal auf einem Broadcastmedium zu empfangen, im Empfangsmodus ein Kommunikationssignal tatsächlich empfängt oder überträgt, und im Standbymodus für jedes Kommunikationssignal taub ist, und
wobei jede Funkvorrichtung (A, B, C, D) unter Verwendung eines Kommunikationssignals kommuniziert, das eine Vielzahl von Frames umfasst, die in eine Vielzahl von Zeitschlitzen geteilt sind,
wobei jede Funkvorrichtung (A, B, C, D) Steuerdaten mit benachbarten Funkvorrichtungen (A, B, C, D) gemeinsam verwendet, wobei die Steuerdaten Daten zum Verwalten einer Zeitschlitzzuteilung im Kommunikationsnetzwerk (1) umfassen und jede Funkvorrichtung (A, B, C, D) eine Kommunikation mit einer anderen Funkvorrichtung (A, B, C, D) in einem Zeitschlitz eines nächsten Frames anzeigt, und
wobei
jede Funkvorrichtung (A, B, C, D) für den Betrieb zwischen dem Empfangsmodus, dem Suchmodus und dem Standbymodus umschaltet,
jede Funkvorrichtung (A, B, C, D) jedem Zeitschlitz entweder einen Empfangsschlitzstatus, einen Suchschlitzstatus oder einen Standbyschlitzstatus zuweist, wobei der zugewiesene Schlitzstatus von einem aktuellen Status der Kommunikation zwischen Funkvorrichtungen (A, B, C, D) abhängig ist und wobei der Status der Kommunikation zwischen den Funkvorrichtungen (A, B, C, D) insbesondere definiert, ob eine Funkvorrichtung (A, B, C, D) mit einer oder mehreren anderen Funkvorrichtungen (A, B, C, D) kommuniziert,
jeder Frame genau einen Suchzeitschlitz in einer Position umfasst, die jeder Funkvorrichtung (A, B, C, D) bekannt ist,
jede Funkvorrichtung (A, B, C, D) bestimmt, dass der Suchzeitschlitz in einem Frame der erste Zeitschlitz ist, der sich nicht im Empfangsschlitzstatus befindet, und
jede Funkvorrichtung (A, B, C, D) in Zeitschlitzen, die sich nicht im Suchstatus und nicht in einem Empfangsstatus, die einer Kommunikation der jeweiligen Funkvorrichtung (A, B, C, D) zugewiesen sind, befinden, in einen Standbymodus umschaltet.

5. Verfahren nach Anspruch 4, wobei
alle Funkvorrichtungen (A, B, C, D) des Kommunikationsnetzwerks (1) während des Suchzeitschlitzes im Suchmodus betrieben werden.

6. Computerprogramm mit Programmcodemitteln zum Ausführen der Schritte nach einem der Ansprüche 4 bis 5, wenn das Programm auf einem Computer oder einem digitalen Signalprozessor ausgeführt wird.

## Revendications

1. Système d'accès dynamique aux canaux pour un réseau de communication basé sur un accès multiple par répartition dans le temps, TDMA, (1) configuré comme un réseau sans fil ad hoc comprenant une pluralité de dispositifs radio (A, B, C, D),
dans lequel chaque dispositif radio (A, B, C, D) est configuré pour fonctionner dans un mode de réception, un mode de recherche ou un mode de veille comme modes fonctionnels pertinents,
dans lequel chaque dispositif radio (A, B, C, D) est en mesure de recevoir un signal de communication sur un support de diffusion dans le mode de recherche, reçoit ou transmet effectivement un signal de communication dans le mode de réception, et est sourd à tout signal de communication dans le mode de veille,
dans lequel chaque dispositif radio (A, B, C, D) est configuré pour communiquer en utilisant un signal de communication qui comprend une pluralité de trames divisées en une pluralité de créneaux temporels,
dans lequel chaque dispositif radio (A, B, C, D) est configuré pour partager des données de commande avec des dispositifs radio voisins (A, B, C, D), les données de commande comprenant des données pour gérer une allocation de créneaux temporels dans le réseau de communication (1) et chaque dispositif radio (A, B, C, D) est configuré pour indiquer une communication avec un autre dispositif radio (A, B, C, D) dans un créneau temporel d'une trame suivante, et
dans lequel
chaque dispositif radio (A, B, C, D) est configuré pour commuter entre les modes fonctionnels de réception, de recherche et de veille,
chaque dispositif radio (A, B, C, D) est configuré pour attribuer chaque créneau temporel soit à un état de créneau de réception, soit à un état de créneau de recherche, soit à un état de créneau de veille, dans lequel l'état de créneau attribué dépend d'un état actuel de communication entre les dispositifs radio (A, B, C, D), et dans lequel l'état de communication entre les dispositifs radio (A, B, C, D) définit en particulier si un dispositif radio (A, B, C, D) communique avec un ou plusieurs autres dispositifs radio (A, B, C, D),
chacune trame comprend exactement un créneau temporel de recherche à une position connue de chaque dispositif radio (A, B, C, D),
chaque dispositif radio (A, B, C, D) est configuré pour déterminer le créneau temporel de recherche dans une trame qui est le premier créneau temporel qui n'est pas dans l'état de créneau de réception, et
chaque dispositif radio (A, B, C, D) est configuré pour commuter vers un mode de veille pour tous les créneaux temporels à l'exception des créneaux temporels de recherche, et recevoir des créneaux temporels qui sont attribués à une communication des dispositif radio (A, B, C, D) respectifs.

2. Système selon la revendication 1, dans lequel
tous les dispositifs radio (A, B, C, D) du réseau sont configurés pour fonctionner dans le mode de recherche pendant le créneau temporel de recherche.

3. Dispositif radio pour un réseau de communication basé sur le TDMA (1) configuré comme un réseau sans fil ad hoc avec un système d'accès dynamique aux canaux,
dans lequel le dispositif radio est configuré pour fonctionner dans un mode de réception, un mode de recherche ou un mode de veille comme modes fonctionnels pertinents,
dans lequel le dispositif radio est en mesure de recevoir un signal de communication sur un support de diffusion dans le mode de recherche, reçoit effectivement un signal de communication dans le mode de réception, et est sourd à tout signal de communication dans le mode de veille, et
le dispositif radio est configuré pour communiquer avec un autre dispositif radio (A, B, C, D) du réseau de communication (1) en utilisant un signal de communication qui comprend une pluralité de trames divisées en une pluralité de créneaux temporels,
dans lequel le dispositif radio est configuré pour partager des données de commande avec d'autres dispositifs radio voisins, les données de commande comprenant des données pour gérer une allocation de créneaux temporels dans le réseau de communication (1) et le dispositif radio est configuré pour indiquer une communication avec l'autre dispositif radio dans un créneau temporel d'une trame suivante, et
dans lequel
le dispositif radio est configuré pour commuter entre les modes fonctionnels de réception, de recherche et de veille,
le dispositif radio est configuré pour attribuer chaque créneau temporel soit à un état de créneau de réception, soit à un état de créneau de recherche, soit à un état de créneau de veille, dans lequel l'état de créneau attribué dépend d'un état actuel de communication entre les dispositifs radio (A, B, C, D) et dans lequel l'état de communication entre les dispositifs radio (A, B, C, D) définit en particulier si un dispositif radio (A, B, C, D) communique avec un ou plusieurs autres dispositifs radio (A, B, C, D),
le dispositif radio est configuré pour commuter vers un mode de recherche dans un créneau temporel de recherche dédié à une position connue dans la trame,
le dispositif radio est configuré pour déterminer le créneau temporel de recherche dans une trame comme le premier créneau temporel qui n'est pas dans l'état de créneau de réception, et
le dispositif radio (A, B, C, D) est configuré pour commuter vers un mode de veille pour tous les créneaux temporels à l'exception des créneaux temporels de recherche et des créneaux temporels de réception qui sont attribués à une communication du dispositif radio (A, B, C, D).

4. Procédé pour un système d'accès dynamique aux canaux dans un réseau de communication basé sur le TDMA (1) configuré comme un réseau sans fil ad hoc comprenant une pluralité de dispositifs radio (A, B, C, D),
dans lequel chaque dispositif radio (A, B, C, D) fonctionne dans un mode de réception, un mode de recherche ou un mode de veille comme modes fonctionnels pertinents,
dans lequel chaque dispositif radio (A, B, C, D) est en mesure de recevoir un signal de communication sur un support de diffusion dans le mode de recherche, reçoit ou transmet effectivement un signal de communication dans le mode de réception, et est sourd à tout signal de communication dans le mode de veille, et
dans lequel chaque dispositif radio (A, B, C, D) communique en utilisant un signal de communication qui comprend une pluralité de trames divisées en une pluralité de créneaux temporels,
dans lequel chaque dispositif radio (A, B, C, D) partage des données de commande avec des dispositifs radio voisins (A, B, C, D), les données de commande comprenant des données pour gérer une allocation de créneaux temporels dans le réseau de communication (1), et chaque dispositif radio (A, B, C, D) indique une communication avec un autre dispositif radio (A, B, C, D) dans un créneau temporel d'une trame suivante, et
dans lequel
chaque dispositif radio (A, B, C, D) commute entre les modes fonctionnels de réception, de recherche et de veille,
chaque dispositif radio (A, B, C, D) attribue chaque créneau temporel soit à un état de créneau de réception, soit à un état de créneau de recherche, soit à un état de créneau de veille, dans lequel l'état de créneau attribué dépend d'un état actuel de communication entre les dispositifs radio (A, B, C, D) et dans lequel l'état de communication entre les dispositifs radio (A, B, C, D) définit en particulier si un dispositif radio (A, B, C, D) communique avec un ou plusieurs autres dispositifs radio (A, B, C, D),
chacune trame comprend exactement un créneau temporel de recherche à une position connue de chaque dispositif radio (A, B, C, D),
chaque dispositif radio (A, B, C, D) détermine le créneau temporel de recherche dans une trame qui est le premier créneau temporel qui n'est pas dans l'état de créneau de réception, et
chaque dispositif radio (A, B, C, D) commute vers un mode de veille dans des créneaux temporels qui ne sont pas dans l'état de recherche et ne sont pas dans un état de réception attribués à une communication du dispositif radio (A, B, C, D) respectif.

5. Procédé selon la revendication 4, dans lequel
tous les dispositifs radio (A, B, C, D) du réseau de communication (1) fonctionnent dans le mode de recherche pendant le créneau temporel de recherche.

6. Programme informatique avec des moyens de code de programme pour exécuter les étapes selon l'une des revendications 4 et 5, lorsque le programme est exécuté sur un ordinateur ou un processeur de signaux numériques.
